# EUROPEAN PATENT APPLICATION

(11) **EP 2 790 038 A2**
(43) Date of publication of application: **15.10.2014**
(21) Application number: 14164175.3
(22) Date of filing: 10.04.2014
(51) Int. Cl.: G01V 3/00, H01P 3/00

(54) **System and method for sensing signal disruption**

(30) Priority: 10.04.2013 GB 201306555
(71) Applicant: ROKE MANOR RESEARCH LIMITED, Romsey, Hampshire SO51 0ZN (GB)
(72) Inventor: Turner, Janice, Romsey, Hampshire SO51 0ZN (GB); Jessup, Mike, Romsey, Hampshire SO51 0ZN (GB)
(74) Representative: Thompson, Andrew John

(57) **Abstract**

A system for sensing disruption to a signal propagating along a guiding medium for guiding electromagnetic surface waves, the system comprising: a guiding medium for guiding electromagnetic surface waves; a transmitter arranged to transmit electromagnetic surface waves along the guiding medium; a receiver arranged to receive electromagnetic surface waves transmitted along the guiding medium and to measure changes to a signal transmitted via the guiding medium in order to sense disruption to said signals based on said measured changes.

## Description

The present invention relates to a system and method for sensing signal disruption. In particular is relates to a system and method for sensing disruption to a signal transmitted via a guiding medium suitable for carrying electromagnetic surface waves.

### Background to the Invention

The applicant's prior published patent application GB2494435 discloses a communication system which utilises a guiding medium which is suitable for sustaining electromagnetic surface waves. The contents of GB2494435 are hereby incorporated by reference. The present application presents various applications and improvements to the system disclosed in GB2494435,

### Summary of the Invention

In a first aspect, the present invention provides a system for sensing disruption to a signal propagating along a guiding medium for guiding electromagnetic surface waves, the system comprising: a guiding medium for guiding electromagnetic surface waves; a transmitter arranged to transmit electromagnetic surface waves along the guiding medium; a receiver arranged to receive electromagnetic surface waves transmitted along the guiding medium and to measure changes to a signal transmitted via the guiding medium in order to sense disruption to said signals based on said measured changes.

In a second aspect, the present invention provides a method of sensing disruption to a signal in a system for sensing disruption to a signal propagating along a guiding medium for guiding electromagnetic surface waves, the system comprising: a guiding medium for guiding electromagnetic surface waves; a transmitter arranged to transmit electromagnetic surface waves along the guiding medium; a receiver arranged to receive electromagnetic surface waves transmitted along the guiding medium and to measure changes to a signal transmitted via the guiding medium in order to sense disruption to said signals based on said measured changes; the method comprising:
transmitting a signal as an electromagnetic surface wave along the guiding medium;
measuring a change in a signal transmitted via the guiding medium; sensing disruption to said signals based on said measured changes.

Further examples of features of embodiments of the present invention are recited in the appended claims.

### Brief Description of Embodiments of the Invention

Embodiments of the present invention will now be described, by way of example only, and with reference to the accompanying drawings, in which:
Figure 1 shows a system in accordance with a first embodiment of the present invention; and
Figure 2 is a flow chart showing a method in accordance with an embodiment of the present invention.

### Detailed Description of Embodiments of the Invention

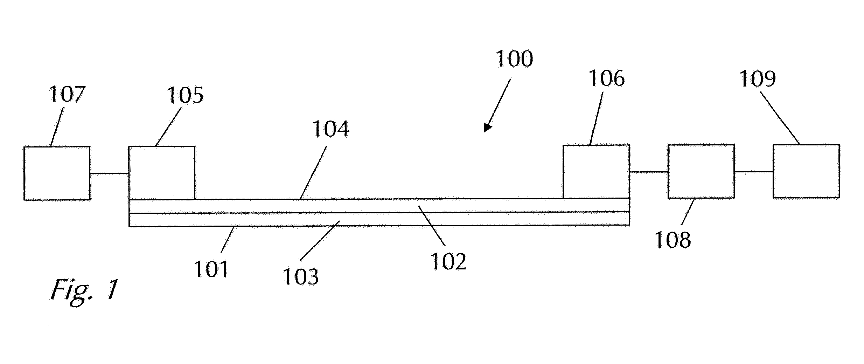

A first embodiment of the invention will be described in connection with Figure 1. Figure 1 shows a system 100 which may be used to sense the movement of objects. The system 100 includes a guiding medium 101. The guiding medium 101 is a high impedance channel in which the reactive impedance is higher than the resistive impedance. Such a channel is suitable for the propagation of electromagnetic surface waves. In this example, the guiding medium includes a dielectric layer 102 and a conductive layer 103. This guiding medium is similar to the one described in the applicant's co-pending patent application published under number GB2494435. As will be appreciated, the high impedance channel may take other forms, as described in GB2494435.

The dielectric layer 102 is a sheet of material having a uniform thickness. The width and length of the dielectric layer 102 will vary depending on the specific application. In this example, an upper surface 104 of the dielectric layer 102 is the surface over which surface waves are transmitted. The conductive layer 103 is also a sheet of material having a uniform thickness. The width and length of the conductive layer 103 are generally the same as those equivalent dimensions of the dielectric layer 102, but they are not necessarily the same. The conductive layer 103 is positioned against the dielectric layer 102. The dielectric layer 102 and the conductive layer 103 accordingly form a dielectric coated conductor.

The upper surface 104 of the dielectric layer 102, and hence the guiding medium 101, has a reactive impedance which is greater than its resistive impedance. Such a surface is suitable for guiding surface waves. In particular, the reactance and resistance is such that the surface is suitable for guiding Zenneck surface waves. The layer of air formed above the guiding medium acts as the transmission medium for the surface wave.

The system 100 includes a transmit launcher 105 and a receive collector 106. The system 100 also includes a transmitter 107 and a receiver 108. The transmitter 107 is arranged to transmit a signal to transmit launcher 105. The transmit launcher 105 modulates a carrier signal which is then launched onto the guiding medium 101. The receive collector 106 receives the surface waves which have propagated over the guiding medium 101. The receive collector 106 has the same construction as the transmit launcher 105. However, it operates in reverse, collecting surface waves from the guiding medium 101, rather than launching them. The receive collector 106 demodulates the carrier signal and passes the received signal to the receiver 108.

The system 100 effectively forms a communications channel in which signals may be sent from one point to another, via the guiding medium 101. Accordingly, the guiding medium 101 acts as a transmission line. As such, anything which interferes with the transmission of signals along the transmission line may be detected by measuring changes to the signals which pass along the guiding medium 101, or by measuring changes to any reflected signals at the transmit end.

It has been appreciated by the applicant that when items move close to the guiding medium 101, the signal power measured at the receiver is reduced. The insertion loss for a given object can therefore be measured. The system 100 also includes an power measurement device 109, which is located at the receiver end. The power measurement device 109 measures the signal power at the receiver 106. When an object moves closer to the guiding medium 101, the receive power is reduced, and the power measurement device 109 calculates an power loss for the movement of the object. The power measurement device may calculate insertion loss.

There are various applications for this system. For example, it is often the case that machinery includes rotating parts. Those parts often move very close to each other, and their positions are set with very small tolerances. If a part were to move too close to another, such that a touch occurs, the machinery could be damaged or broken. A guiding medium may be placed on a surface of a rotating part. The power measurement device 109 determines the insertion loss due to the position of the parts under normal operating conditions. In the event of movement of the parts in use, the power loss will increase, and this will be measured by the power measurement device 109. This can then be used to raise an alarm.

In an alternative embodiment, the system 100 may also be used to detect damage to a surface, including the appearance of gaps or movement in a surface. For example, a guiding medium 101 may be placed on a structurally important surface of a vehicle, such as an aircraft wing. Any movement, cracks or gaps that appear in the surface will stretch, move or break the guiding medium. Such movement will result in a drop power at the receiver 108 which can be picked up by the power measurement device.

In addition to insertion loss, the system may use channel estimation figures, or return loss. The later may be useful for the surface movement detection example. Any break in the guiding medium would result in a reflection from the broken edge. This could be detected at the transmitter end. A common element to these embodiments is the detection in changes in the transmission channels link budget to indicate some sort of disruption to the surface wave signal.

It should be noted that in an alternative embodiment, the transmit and receive ends could be co-located for return loss measurements. Furthermore, the system could be bidirectional, with transmission in both directions. A grid of bidirectional guiding medium transmission lines could be used to pin point objects/damage.

Time-domain reflectrometry may be used to enhance the aforementioned techniques. Time-domain reflectrometry techniques could be extended to operate over two-dimensional structures.

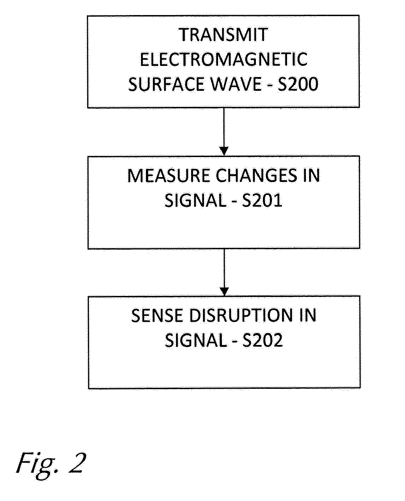

Figure 2 is a flow-chart showing a method in accordance with an embodiment of the present invention. The process begins by transmitting an electromagnetic surface wave along the guiding medium (S200). Following this, any changes in the signal transmitted along the guiding medium are measured (S201). Finally, disruption to the signal is sensed based on the measured signals (S202).

Further modifications and variations of the aforementioned systems and methods may be implemented within the scope of the appended claims.

## Claims

1. A system for sensing disruption to a signal propagating along a guiding medium for guiding electromagnetic surface waves, the system comprising:
a guiding medium for guiding electromagnetic surface waves;
a transmitter arranged to transmit electromagnetic surface waves along the guiding medium;
a receiver arranged to receive electromagnetic surface waves transmitted along the guiding medium and to measure changes to a signal transmitted via the guiding medium in order to sense disruption to said signals based on said measured changes.

2. A system according to claim 1, wherein said receiver further comprises a measurement unit arranged to measure changes to a signal transmitted via the guiding medium.

3. A system according to claims 1 or 2, wherein said receiver further comprises a sensing unit arranged to sense disruption to said signals based on said measured changes.

4. A system according to claim 2, wherein the measurement unit is further arranged to measure a change in one or more of the link budget for said signals or the received signal power.

5. A system according to claim 4, wherein the measurement unit is further arranged to measure insertion loss.

6. A system according to claim 4, wherein the measurement unit is further arranged to measure changes in the channel estimation figures for a given signal.

7. A system according to claim 1, further comprising a return loss measurement unit, coupled to said transmitter, and arranged to measure changes in return loss.

8. A system according to any preceding claim, wherein the sensing unit is further arranged to use time domain reflectometry.

9. A system according to any preceding claim, wherein said disruption is caused by a change in the proximity of an object to the guiding medium.

10. A system according to any of claims 1 to 8, wherein said disruption is caused by a change in a surface to which the guiding medium is attached.

11. A system according to any preceding claim, further comprising a launcher, coupled between the transmitter and the guiding medium, and arranged to launch said surface waves over said guiding medium.

12. A system according to any preceding claim, further comprising a collector, coupled between the guiding medium and the receiver, and arranged to collect said surface waves from said guiding medium.

13. A system according to any preceding claim, wherein the guiding medium is a high impedance surface, the high impedance surface being one of a dielectric, a dielectric coated conductor, or a corrugated surface.

14. A method of sensing disruption to a signal in a system for sensing disruption to a signal propagating along a guiding medium for guiding electromagnetic surface waves, the system comprising: a guiding medium for guiding electromagnetic surface waves; a transmitter arranged to transmit electromagnetic surface waves along the guiding medium; a receiver arranged to receive electromagnetic surface waves transmitted along the guiding medium and to measure changes to a signal transmitted via the guiding medium in order to sense disruption to said signals based on said measured changes; the method comprising:
transmitting a signal as an electromagnetic surface wave along the guiding medium;
measuring a change in a signal transmitted via the guiding medium;
sensing disruption to said signals based on said measured changes.

15. A method according to claim 15, further comprising receiving a signal transmitted as an electromagnetic surface wave along the guiding medium.
